# FASCICULE DE BREVET EUROPEEN

(11) **EP 1 283 342 B1**
(45) Date de publication et mention de la délivrance du brevet: **27.08.2008**
(21) Numéro de dépôt: 02291744.7
(22) Date de dépôt: 11.07.2002
(51) Int. Cl.: F02D 41/02, F01N 3/023, F02D 41/40, F01N 3/035

(54) **Procédé de régénération d'un système de post traitement des gaz d'échappement**
Verfahren zur Regeneration eines Abgasnachbehandlungssystems
Method for regeneration of exhaust gas after-treatment system

(30) Priorité: 01.08.2001 FR 0110285
(43) Date de publication de la demande: 12.02.2003
(73) Titulaire: RENAULT S.A.S., 92100 Boulogne Billancourt (FR)
(72) Inventeur: Blanche, Pierre, 91490 Milly la Foret (FR); Marcelly, Bruno, 91400 Orsay (FR); Maignan, Dominique, 91540 Fontenay le Vicomte (FR); Messaoudi, Isabelle, 91290 Arpajon (FR)

(56) Documents cités:
- DE-A- 19 952 830
- FR-A- 2 799 508
- PATENT ABSTRACTS OF JAPAN vol. 1996, no. 02, 29 février 1996 (1996-02-29) & JP 07 259533 A (NIPPON SOKEN INC), 9 octobre 1995 (1995-10-09)
- DIRECTION DE LA COMMUNICATION: "Particule Filter System" PSA PRESS RELEASES, 15 avril 1999 (1999-04-15), XP002148817

## Description

La présente invention concerne un procédé de régénération d'un système de post traitement des gaz d'échappement comprenant notamment un filtre à particules et un catalyseur d'oxydation. La régénération du système de post traitement des gaz d'échappement consistant notamment en une combustion des particules stockées dans le filtre.

Il existe des solutions pour diminuer les émissions polluantes, le filtre à particules et le catalyseur d'oxydation en font parties. Dans ce type de système le filtre à particules se colmate et il est donc nécessaire de le régénérer périodiquement.

Pour provoquer la combustion des particules, il faut les porter à leur température de combustion qui est d'environ 550°C. Cependant, les gaz d'échappement des moteurs diesels n'atteignent que rarement cette température puisque, par exemple en ville, la température des gaz d'échappement évolue entre 150 et 250°C. Il faut alors augmenter spécifiquement la température des gaz d'échappement, lors de la phase de régénération, de façon qu'ils atteignent la température de combustion des particules dans le filtre à particules.

Différents systèmes ont été proposés. Des systèmes de chauffage par résistance électrique, notamment par des grilles chauffantes, permettent de porter la température des gaz d'échappement à une valeur suffisante pour provoquer la combustion des particules dans le filtre. Cependant, ces systèmes nécessitent une puissance électrique importante qu'il n'est pas toujours possible de fournir. De plus, ils compliquent la conception de la ligne d'échappement.

D'autres systèmes proposent d'augmenter la température des gaz échappement par l'injection d'une quantité supplémentaire de carburant dans au moins une des chambres de combustion sous la forme d'une post-injection. C'est-à-dire, qu'après avoir injecté la quantité de carburant nécessaire au fonctionnement "classique" du moteur, une quantité supplémentaire de carburant est injectée dans un second temps. Une partie de cette quantité de carburant additionnelle s'enflamme en produisant une augmentation de la température des gaz d'échappement, le reste de cette quantité est transformé en produits d'oxydation partielle comme le monoxyde de carbone CO et les hydrocarbures HC.

Pour que la température atteigne la température de combustion des suies, il est nécessaire que les produits d'oxydation partielle réagissent par des réactions exothermiques avant leur arrivée dans le filtre à particules. Les réactions exothermiques sont obtenues lors de la traversée d'un catalyseur d'oxydation.

Ce système nécessite donc la présence d'un catalyseur d'oxydation en amont du filtre à particules et un système d'injection apte à produire la post-injection.

La présente invention a pour but un procédé de régénération d'un système de post traitement des gaz d'échappement permettant de réduire la surconsommation lié aux régénérations du filtre à particules.

Ce but est atteint par un procédé de régénération d'un système de post traitement des gaz d'échappement, le système de post traitement comprenant notamment un filtre à particules, un catalyseur d'oxydation et/ou une phase catalytique intégrée au filtre à particule caractérisé en ce que le procédé comprend une étape d'injection retardée d'un angle déterminé par rapport au point mort haut, d'une quantité principale de carburant, lorsque la température du catalyseur d'oxydation et/ou de la phase catalytique intégrée au filtre à particules est inférieure à un seuil déterminé, une étape d'injection d'une quantité principale de carburant au voisinage du point mort haut, et d'une quantité additionnelle de carburant, appelée post-injection, injectée après la quantité principale lorsque la température du catalyseur d'oxydation et/ou de la phase catalytique intégrée au filtre à particules est supérieure à un seuil déterminé.

D'autres particularités et avantages de la présente invention apparaîtront plus clairement dans la description ci-après faite en référence aux dessins annexés dans lesquels :
la figure 1 représente schématiquement une ligne d'échappement d'un moteur à combustion interne équipé d'un catalyseur d'oxydation et d'un filtre à particule.
Les figures 2A à 2C représentent différents diagrammes représentant les quantité de carburant injectées en fonction de l'angle du vilebrequin par rapport à point mort haut,
La figure 3 représente un diagramme du procédé selon l'invention.

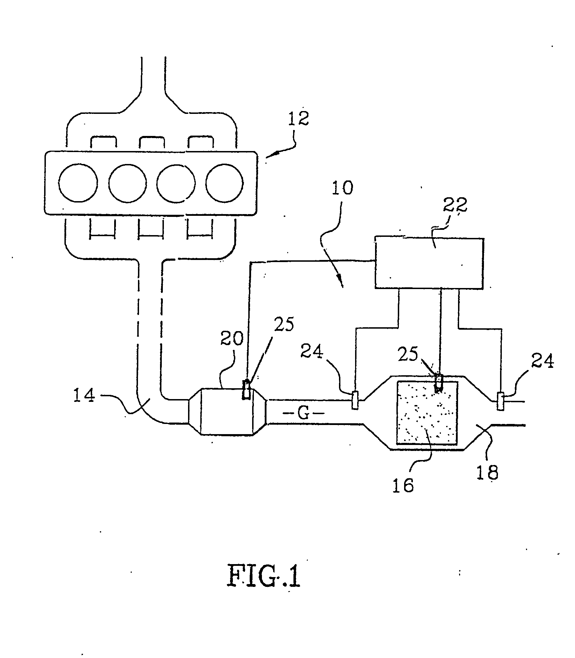

On a représenté sur la figure 1, un système de traitement 10 des gaz d'échappement G d'un moteur à combustion 12. Le moteur 12 est un moteur diesel ou un moteur à essence fonctionnant en mélange pauvre tel qu'un moteur à essence à injection directe.

Une ligne 14 d'échappement permet l'évacuation des gaz G du moteur vers l'atmosphère. Un système de traitement destiné à purifier les gaz d'échappement G est interposé dans la ligne 14. Il se compose principalement d'un filtre à particules 16 agencé dans une chambre 18.

Un catalyseur d'oxydation 20 est inséré dans la ligne 14 d'échappement en amont du filtre à particules 16.

Le filtre à particules 16 se présente avec une face d'entrée et une face de sortie des gaz G. Il est composé de façon connue en soit par exemple de canaux alternativement bouchés et ouverts en entrée et qui sont inversement ouverts et bouchés en sortie. Les parois du filtre à particules 16 sont poreuses.

L'injection du carburant dans le moteur 12 est commandée par un système électronique de commande 22 qui permet de gérer la loi d'injection de carburant dans les chambres de combustions. Des moyens de mesure, tels que des capteurs 24 de pression et/ou des capteurs 25 de température, sont disposés sur la ligne d'échappement et sont reliés au système électronique de commande 22.

Le fonctionnement du système de traitement 10 selon l'état de la technique, par exemple décrit dans la demande française FR2799508 déposée par la demanderesse, est le suivant.

Les gaz d'échappement G produits par le moteur 12 sont envoyés dans la ligne 14. Lors de leur passage dans la chambre 18, les particules contenues dans les gaz G sont arrêtées par le filtre à particules 16.

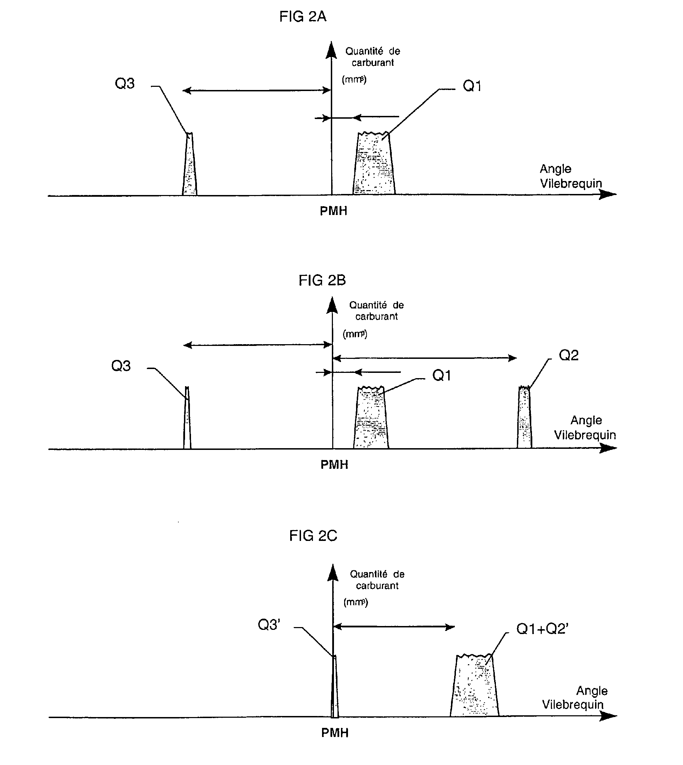

La figure 2A représente le diagramme d'injection lors du fonctionnement normale du moteur. Pendant ce mode de fonctionnement, une quantité principale Q1 de carburant est injectée au voisinage du point mort haut PMH.

Périodiquement les particules ainsi piégées dans le filtre à particules 16 sont brûlées au cours d'une phase de régénération.

Les moyens de mesure 24, 25 transmettent au système électronique de commande 22 des informations représentatives du niveau de chargement du filtre à particules 16.

Le système électronique de commande 22 prend en compte le niveau de chargement du filtre à particules, ainsi que le point de fonctionnement du moteur, pour déclencher la phase de régénération.

La régénération du filtre à particules 16 nécessite d'atteindre une température des gaz d'échappement supérieure ou égale à la température de combustion des particules, c'est-à-dire d'environ 550°C. Il faut donc, dans certains cas, diminuer la température de combustion des particules pour favoriser la phase de régénération, ou augmenter la température des gaz d'échappement.

Plusieurs solutions peuvent être mises en oeuvre de façon indépendante ou concomitante.

L'ajout dans le carburant d'un additif chimique particulier permet d'augmenter les cinétiques de combustion des particules et par conséquent d'abaisser leur température de combustion sur le filtre à particules.

Le filtre à particules 16 peut être recouvert d'une imprégnation particulière appelée phase catalytique qui permet d'abaisser la température de combustion des particules.

De plus, le catalyseur 20 situé en amont du filtre à particules 16 permet de convertir les hydrocarbures imbrûlés HC et le monoxyde de carbone CO en dioxyde de carbone CO2 par oxydation avec l'oxygène. La réaction d'oxydation est exothermique ce qui participe à l'augmentation de la température des gaz d'échappement G.

D'autres solutions sont mises en oeuvre ponctuellement, lorsque la température des gaz d'échappement G en amont du filtre à particules 16 est inférieure à la température de combustion des particules, et lorsque le filtre à particules 16 doit être régénéré.

Parmi celles-ci, conformément à la figure 2B, une quantité supplémentaire Q2 de carburant pour chauffer les gaz d'échappement G, est injectée dans la chambre de combustion du moteur après l'injection, au voisinage du point mort haut PMH, d'une quantité principale de carburant Q1 destinée à fournir le couple moteur.

La quantité supplémentaire Q2 post-injectée subit une combustion partielle, qui fournit quasiment uniquement de l'énergie thermique, dont les produits d'oxydation partielle vont ensuite s'oxyder dans la ligne 14 d'échappement et provoquer une élévation de la température des gaz d'échappement G. L'oxydation se produit principalement lors de la traversée du catalyseur d'oxydation 20.

Une autre méthode consiste dans l'injection d'une quantité supplémentaire Q2' de carburant dans la chambre de combustion du moteur 12, groupée avec l'injection de la quantité principale Q1 comme cela est schématisé à la figure 2C.

L'injection de la quantité de carburant Q2' peut, par exemple, être fusionnée à l'injection de la quantité principale Q1 ce qui se traduit par une injection unique retardée d'une quantité de carburant Q1+Q2', ou bien l'injection de la quantité de carburant Q2' peut être "accolée" à la quantité principale Q1 de carburant sous la forme d'une deuxième injection immédiatement consécutive à l'injection de la quantité principale Q1.

L'injection regroupée des quantités principale Q1 et supplémentaire Q2' a plusieurs effets.

La combustion de la quantité supplémentaire Q2' de carburant étant intégrée à la quantité principale Q1, elle est plus complète, car les conditions, et notamment le mélange air-carburant, sont meilleures. Cela permet d'une part, de réduire au maximum la production de produits d'oxydation partielle tels que l'oxyde de carbone CO et les hydrocarbures imbrûlés HC et, par conséquent, de diminuer les dimensions du catalyseur d'oxydation 20, et d'autre part d'accroître l'augmentation de température des gaz d'échappement G. L'injection regroupée des quantités principale Q1 et supplémentaire Q2' accroît, du fait de la combustion plus complète, plus fortement la température des gaz d'échappement G que lorsque les injections des quantités principale Q1 et supplémentaire Q2' sont nettement séparées.

De plus, l'injection de la quantité Q1+Q2' est retardée par rapport au point mort haut PMH du piston du moteur 12, conformément à la figure 2B.

Le retard par rapport au point mort haut PMH du piston est compris entre selon l'invention entre 25 et 35 degrés du vilebrequin. Cette valeur de 35 degrés du vilebrequin de retard, qui correspond à la limite au-delà de laquelle le carburant injecté dans la chambre de combustion s'infiltre entre les parois de la chambre de combustion et les segments du piston et se mélange avec l'huile de lubrification du moteur, est donnée à titre d'exemple et varie selon les moteurs.

Selon cette stratégie, la combustion du carburant étant plus complète, la production des produits d'oxydation est fortement diminuée, ce qui permet, de réduire les dimensions du catalyseur 20. Enfin, l'injection de carburant étant unique le système électronique de contrôle 22 est simplifié puisque la loi d'injection comprend une seule injection, au lieu d'une injection principale et d'une injection supplémentaire.

Selon une deuxième méthode tirée de l'état de la technique et illustrée dans les figures 2A et 2B, il est connu d'injecter une quantité prédéterminée Q3 ou quantité pilote, avant l'injection de la quantité Q1 correspondant à l'injection principale. Selon une variante de l'invention la quantité pilote est injecté entre 30 et 35° avant le PHM. La quantité Q3 peut servir à diminuer le bruit lié à la combustion de la quantité principale motrice Q1. Selon un autre variante connu l'injection de la quantité Q1+Q2' est décalée conformément au mode de réalisation de la figure 2C, et d'injecter une quantité prédéterminée Q3' augmentée et de la décaler de façon à la rapprocher du point mort haut PMH du piston. L'augmentation de la quantité prédéterminée Q3' dépend notamment du point de fonctionnement du moteur 12.

Il est possible de décaler de façon optimum l'injection de la quantité Q1+Q2'. En effet, plus cette dernière est injectée tard, meilleur est l'accroissement de la température des gaz d'échappement G. Cependant cela provoque une perte de couple que l'augmentation et le décalage de la quantité Q3' permettent de compenser.

Tout comme le mode de réalisation de la figure 2B, le mode de réalisation de figure 2C, permet d'améliorer les performances du procédé de régénération du filtre à particules 16. En effet, pour une quantité globale de carburant injectée, la température des gaz d'échappement est plus élevée que dans une stratégie d'injection classique.

De plus, de façon similaire au mode de réalisation de la figure 2B, le procédé selon le mode de réalisation de la figure 2C nécessite un système électronique de contrôle 22 plus simple puisqu'il n'a que deux injections à gérer au lieu de trois.

Toute les stratégies d'injection qui viennent d'être décrite et connue en soi permettent d'augmenter la température des gaz d'échappement pour provoquer la régénération du filtre à particule. L'injection retardée provoque une combustion tardive et donc une augmentation de la température des gaz d'échappement dès la sortie de la chambre de combustion. Le retard étant appliqué également à l'injection pilote (figure 2C). La post-injection (figure 2B) émet du carburant imbrûlé à l'échappement ce qui provoque une réaction exothermique du catalyseur d'oxydation ou de l'imprégnation catalytique du filtre à particules qui fournit la chaleur nécessaire pour favoriser la combustion des suies.

L'invention se propose de réduire la durée des phases de régénération du filtre à particules en combinant judicieusement les stratégie décrite précédemment. Cette réduction de la durée de régénération permet de diminuer la surconsommation liée à la régénération.

Le principe de l'invention est de maintenir le catalyseur d'oxydation amorcé afin d'entretenir les réactions exothermique d'oxydation qui, par la chaleur dégagée, vont accélérer la régénération du filtre à particules. En effet, le catalyseur d'oxydation ne reste pas toujours amorcé durant toute la phase de régénération ce qui augmente la durée de celle-ci.

Pour ce faire le calculateur reçoit une information relative à l'état d'amorçage du catalyseur 20 ou du filtre à particule 16 s'il comprend une phase catalytique. Cette information peut être fourni par, le capteur 25 de température est disposé au niveau du catalyseur d'oxydation ou du filtre à particule. Un ou plusieurs capteurs 24, 25 cités précédemment peuvent être remplacé par un modèle mathématique.

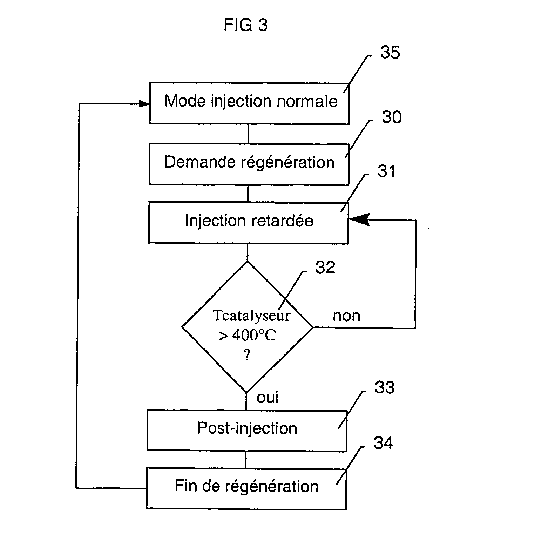

La figure 3 représente un diagramme du procédé selon l'invention. Selon l'invention, une phase de régénération du filtre à particule s'opère en deux étapes. Dès que le calculateur détermine qu'une régénération doit être activée une première étape 30 de mise en température du catalyseur ou de la couche catalysée du filtre à particules est déclenchée jusqu'à ce qu'il ou qu'elle atteigne une température déterminée par exemple de l'ordre de 400°C. Cette température correspond sensiblement à la température d'amorçage du catalyseur ou de la phase catalytique du filtre à particules Pour obtenir cette température, la stratégie de l'injection retardé telle que décrite précédemment est mise en oeuvre par le calculateur d'injection jusqu'à ce que la température déterminée soit atteinte. La surveillance 32 de la température est réalisée par le capteur 25 de température ou bien par le modèle mathématique en fonction de paramètre de fonctionnement du moteur 12. Lorsque la température déterminé est atteinte, le calculateur déclenche la stratégie 33 de post-injection (figure 2) jusqu'à la fin de la régénération. La fin de la régénération est soit déterminée par l'intermédiaire d'un capteur, soit déterminée par un modèle mathématique en fonction notamment de l'état de chargement du filtre à particules au début de la phase de régénération et des paramètre de fonctionnement moteur. Dès la fin 34 de la phase de régénération du filtre à particules le calculateur met en oeuvre une stratégie 35 d'injection normale comportant une injection principale d'une quantité déterminée au voisinage du PMH par exemple entre 0 et 5° du vilebrequin avec éventuellement un pré-injection ou injection pilote telle que définie précédemment en référence à la figure 2A.

Bien entendu, l'invention n'est pas limitée au mode de réalisation qui vient d'être décrit qu'à titre d'exemple.

## Revendications

1. Procédé de régénération d'un système de post traitement des gaz d'échappement, le système de post traitement comprenant notamment un filtre (16) à particules, un catalyseur (20) d'oxydation et/ou une phase catalytique intégrée au filtre (16) à particule **caractérisé en ce que** le procédé comprend :
- une étape (30) d'injection retardée d'un angle déterminé par rapport au point mort haut, d'une quantité principale (Q1+Q2') de carburant, lorsque la température du catalyseur (20) d'oxydation et/ou de la phase catalytique intégrée au filtre à particules est inférieure à un seuil déterminé
- une étape (33) d'injection d'une quantité principale (Q1) de carburant au voisinage du point mort haut, et d'une quantité (Q2) additionnelle de carburant, appelée post-injection, injectée après la quantité principale lorsque la température du catalyseur d'oxydation et/ou de la phase catalytique intégrée au filtre à particules est supérieure à un seuil déterminé.

2. Procédé de régénération d'un système de post traitement des gaz d'échappement selon la revendication 1, **caractérisé en ce que** le seuil de température correspond à la température d'amorçage du catalyseur (20) d'oxydation et/ou de la phase catalytique intégrée au filtre (16) à particules et est de l'ordre de 400°C.

3. Procédé de régénération d'un système de post traitement des gaz d'échappement selon la revendication 1 ou 2, **caractérisé en ce que** le retard à l'injection pour la quantité principale (Q1+Q2') de carburant est compris entre 25° et 35° après le point mort haut.

4. Procédé de régénération d'un système de post traitement des gaz d'échappement selon l'une des revendications 1 à 3, **caractérisé en ce qu'**il comprend en plus de l'injection principale retardée (Q1 +Q2'), une injection supplémentaire (Q'3) appelée quantité pilote, au voisinage du point mort haut.

5. Procédé de régénération d'un système de post traitement des gaz d'échappement selon l'une des revendications 1 à 4, **caractérisé en ce qu'**il comprend en plus de la post-injection (Q2), une injection supplémentaire appelée quantité pilote Q3, injectée avant l'injection principale de carburant avec un angle déterminé avant le point mort haut, l'angle étant compris entre 30° et 35°.

## Claims

1. Method for regenerating an exhaust gas after-treatment system, the after-treatment system comprising in particular a particulate filter (16), an oxidation catalytic converter (20) and/or a catalytic phase built into the particulate filter (16), **characterized in that** the method comprises:
- a step (30) wherein the injection of a main quantity (Q1 + Q2') of fuel is retarded by a determined angle with respect to top dead centre when the temperature of the oxidation catalytic converter (20) and/or of the catalytic phase built into the particulate filter is below a determined threshold,
- a step (33) wherein a main quantity (Q1) of fuel is injected near to top dead centre and an additional quantity (Q2) of fuel, known as the post-injection quantity, is injected after the main quantity when the temperature of the oxidation catalytic converter and/or the catalytic phase built into the particulate filter is above a determined threshold.

2. Method for regenerating an exhaust gas after-treatment system according to Claim 1, **characterized in that** the temperature threshold corresponds to the light-off temperature of the oxidation catalytic converter (20) and/or of the catalytic phase built into the particulate filter (16) and is of the order of 400°C.

3. Method for regenerating an exhaust gas after-treatment system according to Claim 1 or 2, **characterized in that** the amount by which the injection of the main quantity (Q1 + Q2') of fuel is retarded is between 25° and 35° after top dead centre.

4. Method for regenerating an exhaust gas after-treatment system according to one of Claims 1 to 3, **characterized in that** it comprises, in addition to the retarded main injection (Q1 + Q2'), an additional injection (Q'3) known as a pilot quantity, near top dead centre.

5. Method for regenerating an exhaust gas after-treatment system according to one of Claims 1 to 4, **characterized in that** it comprises, in addition to the post-injection (Q2), an additional injection known as a pilot quantity (Q3) injected before the main injection of fuel at a determined angle before top dead centre, the angle being between 30° and 35°.

## Patentansprüche

1. Verfahren zur Regeneration eines Abgasnachbehandlungssystems, wobei das Nachbehandlungssystem insbesondere einen Partikelfilter (16), einen Oxidationskatalysator (20) und/oder eine in den Partikelfilter (16) integrierte katalytische Phase aufweist, **dadurch gekennzeichnet, dass** das Verfahren aufweist:
- einen Schritt (30) einer um einen bestimmten Winkel bezüglich des oberen Totpunkts verzögerten Einspritzung einer Hauptmenge (Q1+Q2') von Kraftstoff, wenn die Temperatur des Oxidationskatalysators (20) und/oder der in den Partikelfilter integrierten katalytischen Phase unter einer bestimmten Schwelle liegt,
- einen Schritt (33) des Einspritzens einer Hauptmenge (Q1) von Kraftstoff in der Nähe des oberen Totpunkts, und einer zusätzlichen Kraftstoffmenge (Q2), Nacheinspritzung genannt, die nach der Hauptmenge eingespritzt wird, wenn die Temperatur des Oxidationskatalysators und/oder der in den Partikelfilter integrierten katalytischen Phase über einer bestimmten Schwelle liegt.

2. Verfahren zur Regeneration eines Abgasnachbehandlungssystems nach Anspruch 1, **dadurch gekennzeichnet, dass** die Temperaturschwelle der Starttemperatur des Oxidationskatalysators (20) und/oder der in den Partikelfilter (16) integriertem katalytischen Phase entspricht und in der Größenordnung von 400°C liegt.

3. Verfahren zur Regeneration eines Abgasnachbehandlungssystems nach Anspruch 1 oder 2, **dadurch gekennzeichnet, dass** die Verzögerung bei der Einspritzung für die Hauptmenge (Q1+Q2') von Kraftstoff zwischen 25° und 35° nach dem oberen Totpunkt liegt.

4. Verfahren zur Regeneration eines Abgasnachbehandlungssystems nach einem der Ansprüche 1 bis 3, **dadurch gekennzeichnet, dass** es außer der verzögerten Haupteinspritzung (Q1+Q2') eine zusätzliche Einspritzung (Q'3), Pilotmenge genannt, in der Nähe des oberen Totpunkts aufweist.

5. Verfahren zur Regeneration eines Abgasnachbehandlungssystems nach einem der Ansprüche 1 bis 4, **dadurch gekennzeichnet, dass** es außer der Nacheinspritzung (Q2) eine Pilotmenge (Q3) genannte zusätzliche Einspritzung aufweist, die vor der Haupteinspritzung von Kraftstoff mit einem bestimmten Winkel vor dem Totpunkt eingespritzt wird, wobei der Winkel zwischen 30° und 35° liegt.
